(19) Europäisches Patentamt / European Patent Office / Office européen des brevets

(11) **EP 3 521 352 A1**

(12) **EUROPEAN PATENT APPLICATION**
published in accordance with Art. 153(4) EPC

(43) Date of publication:
**07.08.2019 Bulletin 2019/32**

(51) Int Cl.:
***C08J 9/06*** (2006.01)

(21) Application number: **17856392.0**

(22) Date of filing: **28.09.2017**

(86) International application number:
**PCT/JP2017/035361**

(87) International publication number:
**WO 2018/062443 (05.04.2018 Gazette 2018/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **30.09.2016 JP 2016193906**

(71) Applicant: **Sekisui Chemical Co., Ltd.**
**Osaka-shi, Osaka 530-8565 (JP)**

(72) Inventors:
• **SUGIE, Yukihiro**
  **Hasuda-shi**
  **Saitama 349-0198 (JP)**
• **UNO, Takumei**
  **Hasuda-shi**
  **Saitama 349-0198 (JP)**
• **MIKAMI, Hiroki**
  **Hasuda-shi**
  **Saitama 349-0198 (JP)**
• **TAKASUGI, Hajime**
  **Hasuda-shi**
  **Saitama 349-0198 (JP)**

(74) Representative: **Ter Meer Steinmeister & Partner**
**Patentanwälte mbB**
**Nymphenburger Straße 4**
**80335 München (DE)**

(54) **CROSSLINKED POLYOLEFIN FOAM AND MOLDED ARTICLE USING SAME**

(57) The crosslinked polyolefin foam of the present invention is a crosslinked polyolefin foam made by crosslinking and foaming a polyolefin-based resin composition comprising a polypropylene-based resin and an elastomer, wherein the polypropylene-based resin being contained in an amount of 45 to 85 mass% based on the total resin components in the polyolefin-based resin composition, the crosslinked polyolefin foam having a 25% compressive strength of 60 to 120 kPa and a ratio of integral value of area under curve value of a stress-strain curve from 0% strain to 25% strain to a product of a strain of 25% and a stress at 25% strain of 0.45 to 0.65.

Figure 1

Printed by Jouve, 75001 PARIS (FR)

**Description**

Technical Field

The present invention relates to a crosslinked polyolefin foam for use as materials for vehicle interior or the like, and a formed product made from the same.

Background Art

Crosslinked polyolefin foams are excellent in mechanical strength, flexibility, lightweight property, thermal insulation performance, etc., and widely used as heat insulators, cushions, etc., in various fields. For example, in an automobile field, the foams are used as materials for vehicle interior including a ceiling, a door, and an instrument panel. As the resin in the preparation of crosslinked polyolefin foams, polyolefin-based resins such as polypropylene-based resins are used. It is also known that an elastomer is mixed in the polyolefin-based resin as disclosed in Patent Literature 1. In general, crosslinked polyolefin foams mixed with an elastomer have a reduced compressive strength and enhanced flexibility.

Citation List

Patent Literature

PTL 1: WO 2007/029924 A1

Summary of Invention

Technical Problem

Crosslinked polyolefin foams are required to have further improved flexibility for improvement in touch feeling, for example, for use as vehicle interior in some cases. However, even in the case where the compressive strength is reduced through mixing with an elastomer as in Patent Document 1, the soft tactile sensation may not be created so much, and thus improvement in touch feeling may not be achieved. Further, in the case where the compressive strength is reduced through increase in the amount of an elastomer, the formability in a secondary processing of the foams may be worsened or the mechanical strength may be reduced.
It is an object of the present invention, in view of these circumstances, to provide a crosslinked polyolefin foam with improved formability, creating a soft tactile sensation, while having a compressive strength in a predetermined range.

Solution to Problem

Through extensive studies, the present inventor has found that even when foams each have the same compressive strength value, which is commonly used as an index of the flexibility of a foam, some foams provide softness and others provide hardness in human tactile sensation. It has also been found that such a difference in the tactile sensation even with the same compressive strength is caused from the following matter: a hard feel is created by a stress increased in an early stage after initiation of the compression whereas a soft feel is created by a stress increased in a late stage after initiation of the compression. The present invention has been made based on the founding described above. It has been found that the problem can be solved by appropriately controlling the integral value of area under curve value of a stress-strain curve from 0% strain to 25% strain and also keeping the compressive strength in a predetermined range. The present inventor has reached the present invention described below. Typically, the present invention provides the following [1] to [11].

[1] A crosslinked polyolefin foam made by crosslinking and foaming a polyolefin-based resin composition comprising a polypropylene-based resin and an elastomer,
the polypropylene-based resin being contained in an amount of 45 to 85 mass% based on the total resin components in the polyolefin-based resin composition,
the crosslinked polyolefin foam having a 25% compressive strength of 60 to 120 kPa and a ratio of integral value of area under curve value of a stress-strain curve from 0% strain to 25% strain to a product of a strain of 25% and a stress at 25% strain of 0.45 to 0.65.
[2] The crosslinked polyolefin foam according to [1], having a thickness of 1.5 mm or more.
[3] The crosslinked polyolefin foam according to [1] or [2], wherein the elastomer is an olefin-based rubber.

[4] The crosslinked polyolefin foam according to [3], wherein the olefin-based rubber has a Mooney viscosity ($ML_{1+4}$, 100°C) of 15 to 85.

[5] The crosslinked polyolefin foam according to [3] or [4], wherein the olefin-based rubber is an ethylene-$\alpha$-olefin copolymer-based rubber.

[6] The crosslinked polyolefin foam according to any one of [1] to [5], wherein the elastomer is contained in an amount of 15 to 55 mass% based on the total resin components in the polyolefin-based resin composition.

[Claim 7] [7] The crosslinked polyolefin foam according to any one of [1] to [6], having a crosslinking degree of 30 to 65%.

[8] The crosslinked polyolefin foam according to any one of [1] to [7], having an expansion ratio of the foam of 10 to 28 $cm^3$/g.

[9] The crosslinked polyolefin foam according to any one of [1] to [8], wherein the polypropylene-based resin is contained in an amount of 50 to 80 mass% and the elastomer is contained in an amount of 20 to 50 mass%, based on the total resin components in the polyolefin-based resin composition.

[10] A formed product obtained by forming the crosslinked polyolefin foam according to any one of [1] to [9].

[Claim 11] [11] The formed product according to [10], for use as a material for vehicle interior.

Advantageous Effects of Invention

According to the present invention, a crosslinked polyolefin foam with improved formability, creating a soft tactile sensation, while keeping a compressive strength in a predetermined range can be provided.

Brief Description of Drawings

Figure 1 is a graph showing a stress-strain curve in measurement of compressive strength in Example 1.
Figure 2 is a graph showing a stress-strain curve in measurement of compressive strength in Comparative Example 1.

Description of Embodiment

The present invention will be illustrated below by way of embodiments.

[Crosslinked polyolefin foam]

The crosslinked polyolefin foam of the present invention (hereinafter also referred to as "foam") is a crosslinked polyolefin foam made by crosslinking and foaming a polyolefin-based resin composition (hereinafter also referred to as "resin composition") comprising a polypropylene-based resin and an elastomer.

(25% Compressive strength)

In the present invention, the 25% compressive strength of the foam is to be set in the range of 60 to 120 kPa. In the case of less than 60 kPa, the formability in a secondary processing of a foam may be worsened and the mechanical strength may be reduced. In the case of more than 120 kPa, the flexibility of a foam becomes insufficient, and a hard tactile sensation is resulted, even when the area ratio I/M described below is adjusted to a predetermined range.

From the viewpoint of further improving the formability and the mechanical strength, the 25% compressive strength is preferably 70 kPa or more, more preferably 80 kPa or more. In order to further improve the flexibility and the touch feeling, the 25% compressive strength is preferably 110 kPa or less, more preferably 100 kPa or less.

The 25% compressive strength can be adjusted by selecting such parameters as the type of resin and the expansion ratio. For example, the 25% compressive strength can be reduced by increasing the content of an elastomer such as olefin-based rubber described below, or by decreasing the content of a polypropylene-based resin. Alternatively, the 25% compressive strength can be reduced by increasing the expansion ratio.

(S-S curve)

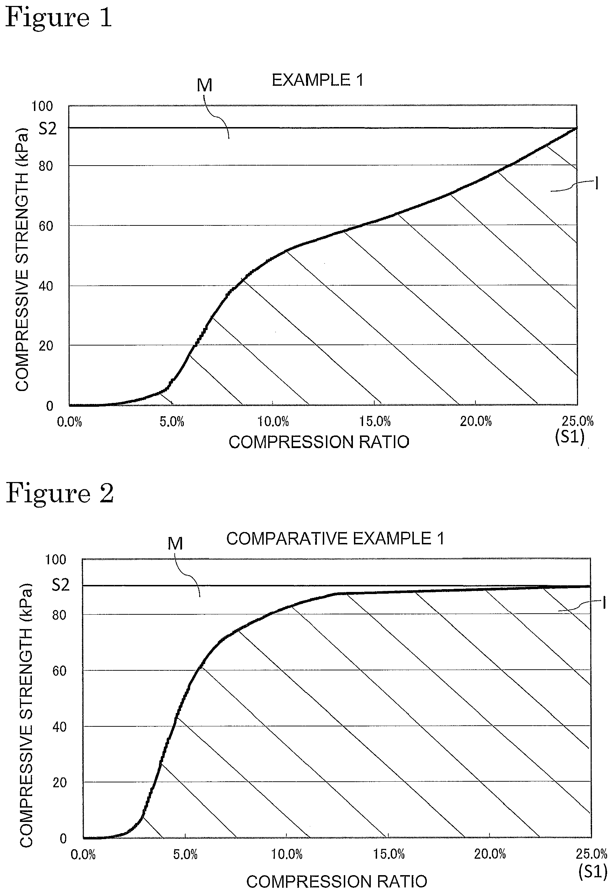

A compressive load is applied to the foam of the present invention until the compression ratio (strain) reaches 25% based on the original foam so as to draw a stress-strain curve (S-S curve) as shown, for example, in Figure 1. In such a case, the ratio of the integrated value (I) of the stress-strain curve from 0% strain to 25% strain to a product (M) of a strain of 25% (S1) and a stress at 25% strain (S2) (i.e., M=S1×S2) is 0.45 to 0.65.

In the case when the ratio of an integrated value (I) to a product (M), (i.e., an area ratio (I/M)) is less than 0.45, the flexibility decreases excessively, which results in the worsened formability in a secondary processing of the foam or the reduced mechanical strength. In the case when an area ratio (I/M) is more than 0.65, a hard tactile sensation is resulted, even when the 25% compressive strength is set in a range of 60 to 120 kPa.

From the viewpoint of providing a softer tactile sensation, the area ratio (I/M) is preferably 0.6 or less. Also, from the viewpoint of improving the formability, the area ratio (I/M) is preferably 0.5 or more.

The area ratio (I/M) can be adjusted by selecting the expansion ratio, the crosslinking degree, or the resin components of a foam. For example, with increase in the crosslinking degree or decrease in the expansion ratio, the area ratio (I/M) tends to decrease. Also, with increase in the amount of an elastomer such as olefin-based rubber described below or decrease in the amount of a polyolefin-based resin in the resin components, the ratio (I/M) tends to decrease.

(Thickness)

Preferably, the foam has a thickness of 1.5 mm or more. With a thickness of 1.5 mm or more, the formability or the like tend to be good. The thickness of the foam is preferably 2 mm or more, more preferably 2.5 mm or more. Further, the thickness of the foam is preferably 15 mm or less, more preferably 9 mm or less, further more preferably 6 mm or less. In the case when the thickness of the foam is set in the range of no higher than the upper limit, the flexibility can be easily ensured. Furthermore, the foam is typically presented in a sheet form.

(Crosslinking degree)

The crosslinking degree (mass%) of the foam is preferably 30 to 65%. With a crosslinking degree of 30% or more, the mechanical strength is improved and the area ratio (I/M) is easily reduced into the range described above. Also, with a crosslinking degree of 65% or less, the flexibility and the formability are easily improved.

In order to improve the mechanical strength, the formability and the flexibility in a good balance, and to easily adjust the ratio (I/M) within the range described above, a crosslinking degree is more preferably 38 to 60%. In order to create a softer tactile sensation with a reduced ratio (I/M), a crosslinking degree is further preferably 40 to 55%.

As for the method for measuring the crosslinking degree, the measurement will be performed in accordance with the procedure described in Examples later.

(Expansion ratio)

The expansion ratio of the foam is preferably 10 to 28 cm$^3$/g. With an expansion ratio of 10 cm$^3$/g or more, the compressive strength is easily reduced, so that the flexibility of the foam can be easily secured. Further, the formability in a secondary processing of the foam are also improved. With an expansion ratio of 28 cm$^3$/g or less, the mechanical strength can be improved and a soft tactile sensation is easily created when the compressive strength is adjusted within the range described above. From these viewpoints, the expansion ratio is preferably 12 to 25 cm$^3$/g, more preferably 15 to 25 cm$^3$/g. The expansion ratio of the foam is calculated as the reciprocal of density.

(Polypropylene-based resin)

The polypropylene-based resin being usable for the preparation of the foam is not particularly limited, and examples thereof include a propylene homopolymer (homopolypropylene) and a copolymer of propylene and another olefin. Although the copolymer of propylene and another olefin may be any one of a block copolymer, a random copolymer, and a random block copolymer, the random copolymer (random polypropylene) is preferred.

Examples of the other olefin to be copolymerized with propylene include an $\alpha$-olefin such as ethylene, 1-butene, 1-pentene, 4-methyl-1-pentene, 1-hexene, 1-octene, 1-nonene and 1-decene. Among them, ethylene is preferred. In other words, an ethylene-propylene random copolymer is preferred as the polypropylene-based resin.

The copolymer of propylene and another olefin typically contains propylene in an amount of 90 to 99.5 mass% and an $\alpha$-olefin other than propylene in an amount of 0.5 to 10 mass%, preferably contains propylene in an amount of 95 to 99 mass% and an $\alpha$-olefin other than propylene in an amount of 1 to 5 mass%

The polypropylene-based resin has a melt flow rate (hereinafter also referred to as "MFR") of, preferably 0.4 to 4.0 g/10 min, more preferably 0.5 to 2.5 g/10 min. Use of the polypropylene-based resin having the MFR in the range tends to provide favorable formability in processing the resin composition to a foam and favorable formability in secondary processing of the foam.

The polypropylene-based resins may be used singly or may be used in combination of two types or more.

The polypropylene-based resin is contained in an amount of 45 to 85 mass% in the resin composition based on the total resin components. In the case when a polypropylene-based resin is contained in amount of less than 45 mass%, the mechanical strength and the heat resistance of the foam are reduced, and it becomes difficult to improve the formability including, for example, formability in a secondary processing of the foam. In the case when a polypropylene-based resin is contained in amount of more than 85 mass%, it becomes difficult to improve the flexibility of the foam, and further, it becomes difficult to create a soft tactile sensation.

From the viewpoints of further improvement in the mechanical strength and the formability, the polypropylene-based resin content is preferably 50 mass% or more, more preferably 60 mass% or more based on the total resin components. Further, in order to improve the flexibility and create a soft tactile sensation, the polypropylene-based resin content is preferably 80 mass% or less, more preferably 70 mass% or less based on the total resin components. Note that the concept called resin components includes an elastomer described below.

(Elastomer)

The resin composition comprises an elastomer, and an olefin-based rubber is preferably employed as the elastomer. In the present invention, use of an elastomer such as olefin-based rubber allows the flexibility of the foam to be easily increased.

As the olefin rubber-based for use, an olefin-based rubber having a Mooney viscosity ($ML_{1+4}$, 100°C) of 15 to 85 is preferably employed. In the case when a Mooney viscosity is selected in the range, the flexibility and the formability can be improved in a good balance. In order to further improve the flexibility and the formability, the Mooney viscosity of the olefin-based rubber is preferably 25 to 75, more preferably 30 to 70.

As the olefin-based rubber, an amorphous or low-crystalline rubber material substantially randomly copolymerized from a plurality of olefin monomers is preferred, and more specifically, an ethylene-$\alpha$-olefin-based copolymer rubber is preferred from the viewpoint of improving the formability and the flexibility in a good balance.

Examples of the $\alpha$-olefin for use in the ethylene-$\alpha$-olefin-based copolymer rubber include one or a plurality of $\alpha$-olefins having 3 to 15 carbon atoms, preferably 3 to 10 carbon atoms, such as propylene, 1-butene, 2-methylpropylene, 3-methyl-1-butene, 1-pentene, 1-hexene, 4-methyl-1-pentene, and 1-octene. In particular, propylene and 1-butene are preferred, and propylene is more preferred.

The ethylene-$\alpha$-olefin-based copolymer rubber may contain another monomer unit in addition to an ethylene unit and an $\alpha$-olefin unit.

Examples of the monomer to form the other monomer unit include a conjugated diene having 4 to 8 carbon atoms, such as 1,3-butadiene, 2-methyl-1,3-butadiene (isoprene), 1-3-pentadiene, and 2,3-dimethyl-1,3-butadiene; a nonconjugated diene having 5 to 15 carbon atoms, such as dicyclopentadiene, 5-ethylidene-2-norbornene, 1,4-hexadiene, 1,5-dicyclooctadiene, 7-methyl-1,6-octadiene, and 5-vinyl-2-norbornene; a vinyl ester compound such as vinyl acetate; an unsaturated carboxylate, such as methyl acrylate, ethyl acrylate, butyl acrylate, methyl methacrylate, and ethyl methacrylate; and an unsaturated carboxylic acid such as acrylic acid and methacrylic acid. The other monomers may be used singly or may be used in combination of two types or more. In particular, a nonconjugated diene having 5 to 15 carbon atoms is preferred, and 5-ethylidene-2-norbornene, 1,4-hexadiene, and dicyclopentadiene (DCPD) are more preferred, and DCPD is most preferred from the viewpoint of easy availability.

In an ethylene-$\alpha$-olefin-based copolymer rubber, the content of ethylene unit is typically 30 to 85 mass%, preferably 40 to 80 mass%, more preferably 45 to 75 mass%; the content of $\alpha$-olefin unit having 3 to 15, preferably 3 to 10, carbon atoms, such as propylene, is typically 10 to 60 mass%, preferably 15 to 50 mass%; and the content of other monomer units such as nonconjugated diene is typically 0 to 20 mass%, preferably 1 to 10 mass%.

An olefin-based thermoplastic elastomer (TPO) can also be used as the olefin-based rubber. An olefin-based thermoplastic elastomer (TPO) generally comprises, as a hard segment, polyolefin such as polyethylene and polypropylene and, as a soft segment, rubber component such as EPM and EPDM. Any of a blended, a dynamic crosslinked, and a polymerized thermoplastic elastomers may be used as the olefin-based thermoplastic elastomer (TPO).

Specific examples of the olefin-based rubber suitable for use include an ethylene-propylene copolymer rubber (EPR) and an ethylene-propylene-diene copolymer rubber (EPDM), and EPDM is preferred. In such a case, examples of the EPDM include an ethylene-propylene-5-ethylidene-2-norbornene copolymer rubber and an ethylene-propylene-dicyclopentadiene copolymer rubber, and among these, an ethylene-propylene-dicyclopentadiene copolymer rubber is preferred.

In the case where an EPDM or an EPR is used as the olefin-based rubber, an elastomer selected from an EPDM or an EPR may be used alone as the elastomer, or the elastomer may be used in combination with an olefin-based thermoplastic elastomer (TPO). In the case of using a TPO in combination, the content of the elastomer selected from an EPDM and an EPR is preferably 50 mass% or more and less than 100 mass%, and the content of the TPO is 50 mass% or less based on the total olefin-based rubber. In such a case, the elastomer selected from an EPDM and an EPR is more preferably an EPDM as disclosed above.

The content of the elastomer such as an olefin-based rubber is preferably 15 to 55 mass% based on the total resin components in the resin composition. In the case when the content is 15 mass% or more, the foam has good flexibility to allow a soft tactile sensation to be easily created. In the case when the content is 55 mass% or less, the formability and the mechanical strength of the foam can be easily improved. From the viewpoint of further improvement in the flexibility and the touch feeling of the foam, the content of the elastomer is more preferably 20 mass% or more, further more preferably 30 mass% or more. From the viewpoint of further improvement in the mechanical strength and the formability, the content of the elastomer is more preferably 50 mass% or less, further more preferably 40 mass% or less.

(Other resin component)

The resin composition may be composed of a polypropylene-based resin and an elastomer such as olefin-based rubber only, or may include a resin component other than these as long as it does not impair the effect of the present invention.

Examples of the other resin components include a polyethylene-based resin, an ethylene-vinyl acetate copolymer, an ethylene-acrylic acid copolymer, an ethylene-alkyl(meth)acrylate copolymer, and modified copolymers produced by copolymerizing the above-mentioned copolymers with maleic anhydride.

In the case of the resin composition comprising the other resin such as a polyethylene-based resin, the content is preferably 30 parts by mass or less, more preferably 20 parts by mass or less, relative to 100 parts by mass of the polypropylene-based resin.

(Foaming agent)

Method for foaming of the resin composition includes a chemical foaming method or a physical foaming method. The chemical foaming method is such a process in which a compound added to the resin composition is thermally decomposed to generate a gas, which produces bubbles. The physical foaming method is such a process in which the resin composition is impregnated with a liquid having a low boiling point (foaming agent) and the foaming agent is then volatilized to produce cells. Although the foaming method is not particularly limited, the chemical foaming method is preferred. When using the chemical foaming method, a foam having closed cells can be produced, and further, cells can be created uniformly.

A thermally decomposable foaming agent can be used as foaming agent. For example, an organic or inorganic chemical foaming agent having a decomposition temperature of about 140°C to 270°C can be used,.

Examples of the organic foaming agent include: an azo compound such as azodicarbonamide, a metal azodicarboxylate (e.g. barium azodicarboxylate), and azobisisobutyronitrile; a nitroso compound such as N,N'-dinitrosopentamethylenetetramine; a hydrazine derivative, such as hydrazodicarbonamide, 4,4'-oxybis(benzenesulfonyl hydrazide), and toluenesulfonyl hydrazide; and a semicarbazide compound such as toluenesulfonyl semicarbazide.

Examples of the inorganic foaming agent include an acid ammonium, sodium carbonate, ammonium hydrogen carbonate, sodium hydrogen carbonate, ammonium nitrite, sodium borohydride, and monosodium citrate anhydrate.

In particular, from the viewpoint of obtaining fine bubbles and the viewpoint of economic efficiency and safety, an azo compound and a nitroso compound are preferred; azodicarbonamide, azobisisobutyronitrile, and N,N'-dinitrosopentamethylenetetramine are more preferred; and azodicarbonamide is particularly preferred.

The foaming agents may be used singly or may be used in combination of two types or more.

The amount of a thermally decomposable foaming agent added to the resin composition is preferably 1 to 30 parts by mass, more preferably 2 to 15 parts by mass, further more preferably 5 to 12 parts by mass, relative to 100 parts by mass of the resin components, from the viewpoint of proper foaming without burst of bubbles in a foam.

(Other additive)

The resin composition may contain an additive other than the foaming agent. Examples of the other additive include a crosslinking aid and an antioxidant. One or both of them may be contained.

A multi-functional monomer may be used as crosslinking aid. Examples thereof include: a tri-functional (meth)acrylate compound such as trimethyrolpropane trimethacrylate and trimethyrolpropane triacrylate; a compound having three functional groups in a molecule such as trimellitic acid triallyl ester, 1,2,4-benzene tricarboxylic acid triallyl ester, and triallyl isocyanurate; a bi-functional (meth)acrylate compound such as 1,6-hexanediol dimethacrylate, 1,9-nonanediol dimethacrylate, 1,10-decanediol dimethacrylate, and neopentyl glycol dimethacrylate; a compound having two functional groups in a molecule such as divinylbenzene; diallylphthalate, diallylterephthalate, diallylisophthalate, ethylvinylbenzene, laurylmethacrylate, and sterylmethacrylate. Among them, tri-functional (meth)acrylate compound is more preferred.

The crosslinking aid may be used singly or may be used in combination of two types or more.

The addition of a crosslinking aid to a resin composition allows the resin composition to be crosslinked with a low dose of ionizing radiation. As a result, the individual resin molecule is prevented from being fractured or deteriorated by the exposure to ionizing radiation.

The content of the crosslinking aid is preferably 0.2 to 20 parts by mass, more preferably 0.5 to 15 parts by mass, relative to 100 parts by mass of the resin components contained in the resin composition, from the viewpoint of easiness of adjustment or control of the crosslinking degree in foaming of the resin composition.

Examples of the antioxidant include a phenol-based antioxidant, a sulfur-based antioxidant, a phosphorus-based antioxidant, an amine-based antioxidant. Among them, a phenol-based antioxidant and a sulfur-based antioxidant are preferred, and use of a phenol-based antioxidant and a sulfur-based antioxidant in combination is more preferred.

Examples of the phenol-based antioxidant include 2,6-di-tert-butyl-p-cresol, n-octadecyl-3-(3,5-di-tert-butyl-4-hydorxyphenyl)propionate, 2-tert-butyl-6-(3-tert-butyl-2-hydroxy-5-methylbenzyl)-4-methylphenylacrylate, tetrakis [methylene-3-(3,5-di-tert-butyl-4-hydroxyphenyl)propionate] methane.

Examples of the sulfur-based antioxidant include dilauryl thiodipropionate, dimyristyl thiodipropionate, distearyl thiodipropionate, pentaerythrityl tetrakis(3-lauryl thiopropionate).

The antioxidants may be used singly or may be used in combination of two types or more.

The content of the antioxidant is preferably 0.1 to 10 parts by mass, more preferably 0.2 to 5 parts by mass, relative to 100 parts by mass of the resin components contained in the resin composition.

On an as needed basis, the resin composition may contain an additive other than the above-described ones, such as an agent for adjusting decomposition temperature such as zinc oxide, zinc stearate and urea, a flame retardant, a metal toxicity inhibitor, an antistatic agent, a stabilizer, a filler, and a pigment.

[Manufacturing method of foam]

The foam is manufactured by, for example, melt-kneading the resin composition so as to form into a desired shape, then irradiating the resin composition with ionizing radiation so as to crosslink the resin composition, and causing the composition to foam by heating.

Specifically, a manufacturing process comprising the following steps 1 to 3 is more preferred:

Step 1: A step of melt-kneading the components to compose the resin composition, such as various resin components and a thermally decomposable foaming agent, and then forming the resin composition into a predetermined shape such as a sheet form.
Step 2: A step of irradiating the resin composition obtained in the step 1 with ionizing radiation so as to crosslink the resin composition.
Step 3: A step of foaming by heating the resin composition crosslinked in the step 2 at the decomposition temperature of the thermally decomposable foaming agent or higher so as to obtain a foam.

In the step 1, each of the components to compose the resin composition is supplied to a kneader so as to be melt-kneaded at a temperature lower than the decomposition temperature of the thermally decomposable foaming agent, and then forming the melt-kneaded resin composition into a desired shape such as a sheet form preferably with the kneader used in the melt-kneading.

Examples of the kneader for use include a general-purpose kneader such as an injection molding machine, an extruder such as a mono-axial extruder and a bi-axial extruder, a Banbury mixer, and rolls. Among them, an injection molding machine and an extruder are preferred. With use of an extruder and an injection molding machine, the formed resin composition can be efficiently prepared.

The resin temperature inside an injection molding machine or an extruder is preferably 120 to 220°C, more preferably 140 to 200°C, further more preferably 150 to 195°C.

In the step 2, the resin composition formed into a desired shape is irradiated with ionizing radiation. Examples of the ionizing radiation include electron beam, α-ray, β-ray, and γ-ray, and X-ray. Among them, electron beam is preferred from the view point of productivity and achieving uniform irradiation.

The accelerating voltage of the ionizing radiation depends on the thickness of an expandable resin composition to be irradiated. The accelerating voltage is preferably 400 to 1200 kV, more preferably 500 to 1100 kV, still more preferably 600 to 1000 kV.

The irradiation dose of the ionizing radiation is preferably 0.1 to 10 Mrad, more preferably 0.5 to 5 Mrad, which may be determined so as to provide a desired crosslinking degree without occurrence of a roughened surface, cracks, or the like, considering the thickness of the expandable resin composition to be irradiated.

In the step 3, the crosslinked resin composition is heated at the decomposition temperature of the foaming agent or higher for foaming of the crosslinked resin composition, so that a foam can be obtained through foaming and forming at the same time. The temperature for foaming of the resin composition by heating is typically 140 to 300°C, preferably 150 to 280°C, more preferably 160 to 260°C, depending on the decomposition temperature of the thermally decomposable foaming agent for use as foaming agent. The foam sheet may be stretched in one or both of the MD direction and the CD direction during or after foaming.

The manufacturing process, however, is not limited to the aforementioned process, and the foam may be obtained by a method other than the above. For example, crosslinking may be performed by a method in which the resin composition is blended with an organic peroxide in advance and the organic peroxide is decomposed by heating the resin composition, instead of exposure to ionizing radiation. Alternatively, a foaming agent other than a thermally decomposable foaming agent may be used to cause foaming.

[Formed product]

The formed product of the present invention is made by forming the foam by a known forming method. In manufacturing the formed product, other materials such as a base material and a surfacing material may be bonded together to make a laminate.

The base material is employed as the framework of the formed product, and a thermoplastic resin is typically used. Examples of the thermoplastic resin for use as base material include the polyolefin-based resin disclosed above, a copolymer of ethylene and an α-olefin, vinyl acetate, or an acrylate, an ABS resin, and a polystyrene resin.

Examples of the skin material include a polyvinyl chloride sheet; a sheet made of mixed resin comprising polyvinyl chloride and ABS resin; a thermoplastic elastomer sheet; a textile, a knitted product, and a nonwoven fabric made from natural fiber or synthetic fiber; and leather such as artificial leather and synthetic leather. A composite formed product having a design such as a lenticel or grain pattern on the surface may be manufactured with use of a silicone stamper having a concave-convex pattern transferred from real leather, a stone or a wood.

Examples of the method for laminating a surfacing material on the surface include an extrusion lamination method, an adhesion lamination method including successive steps of adhesive application and lamination, a thermal lamination method (heat seal method), a hot melt method, and a high-frequency welding method, any of which can be employed as long as both materials can be adhered with each another.

Examples of the forming method of the formed product of the present invention include stamp forming, vacuum forming, compression forming and injection molding. Among them, stamp forming and vacuum forming are preferred, and vacuum forming is more preferred. The vacuum forming includes forming over a male mold and forming in a female mold, any one of which may be used.

The formed product of the present invention can be used as an insulator, a cushion, or the like, and can be preferably used in an automobile field as materials for vehicle interior such as a ceiling material, a door, and an instrument panel.

Examples

The present invention will be further illustrated in detail with reference to Examples below. The scope of present invention is by no means limited to Examples.

The method for measuring each of the physical properties and the method for evaluating a foam sheet are as follows.

(1) MFR

The MFR value was measured under conditions with a temperature of 230°C and a load of 2.16 kgf, in accordance with JIS K7210.

(2) Mooney viscosity ($ML_{1+4}$, 100°C)

The Mooney viscosity ($ML_{1+4}$, 100°C) was measured in accordance with JIS K6300-1.

(3) Expansion ratio of foam

The density (apparent density) of a foam was measured in accordance with JIS K7222. The reciprocal of the obtained density was calculated as the expansion ratio.

(4) Crosslinking degree

A test piece of about 100 mg was sampled from a foam, and the weight A (mg) of the test piece was accurately measured. Subsequently the test piece was immersed in 30 cm$^3$ of xylene at 120°C and left standing for 24 hours. The resulting xylene was then filtered with a 200-mesh metal screen, and insoluble components on the metal mesh were collected and vacuum-dried. The weight B (mg) of the insoluble components was accurately measured. The crosslinking degree (mass%) was calculated from the resulting value based on the following formula.

$$\text{Crosslinking degree (mass\%)} = (B/A) \times 100$$

(5) Thickness of foam

A dial gauge was used for the measurement.

(6) 25% Compressive strength and area ratio (I/M)

The 25% compressive strength was measured in accordance with JIS K6767. In measurement of the 25% compressive strength, the S-S curve was drawn to calculate the area in the region under the drawn S-S curve as an integrated value I. Using a value of a strain (S1=25%) multiplied by a 25% compressive strength (S2), i.e., (S1×S2), as a product (M), the area ratio (I/M) was obtained.

(7) Sensory evaluation on tactile sensation and evaluation on formability

The foam obtained in each of Examples and Comparative Examples was formed into a formed product in a bottomed cylindrical cup form having a diameter of 80 mm and a height of 56 mm under conditions at a surface temperature of 120°C, using a vacuum forming machine. The bottom face of the molded cup was compressed with a finger to evaluate its tactile sensation on a scale of 1 to 5. Note that "1" indicates the hardest feel, and that a larger number indicates the softer feel.
Further, the formed product was visually observed to evaluate the formability on the following scale.
1: overall rupture, 2: partial rupture, 3: presence of many see-through spots, 4: presence of partially see-through spots, 5: overall uniformity

Examples 1 to 5, and Comparative Examples 1 to 4

The resin components and the additives each shown in Table 1 in an amount shown in Table 1 were supplied to a mono-axial extruder, melt-kneaded at a resin temperature of 180°C, and extruded to obtain a resin composition in a sheet form. Both surfaces of the resin composition in a sheet form were irradiated with electron beams under the conditions shown in Table 1, so that the resin composition was crosslinked. Subsequently, the crosslinked resin composition was heated in a hot air oven at 250°C for 5 minutes so as to cause foaming. A crosslinked polyolefin foam having a predetermined thickness was thus obtained. The results are shown in Table 1. The S-S curves in Example 1 and Comparative Example 1 are shown in Figures 1 and 2, respectively.

Table 1

| | | Example | | | | | Comparative Example | | | |
|---|---|---|---|---|---|---|---|---|---|---|
| | | 1 | 2 | 3 | 4 | 5 | 1 | 2 | 3 | 4 |
| Components of resin composition (part by mass) | PP | 65 | 80 | 50 | 65 | 65 | 100 | 100 | 95 | 30 |
| | EPDM | 35 | 20 | 50 | 35 | 35 | 0 | 0 | 5 | 70 |
| | Foaming agent | 8.5 | 10.0 | 7.5 | 7.5 | 10.0 | 11.0 | 8.5 | 8.5 | 8.5 |
| | Crosslinking aid | 3 | 3 | 3 | 3 | 3 | 3 | 3 | 3 | 3 |
| | Antioxidant 1 | 0.3 | 0.3 | 0.3 | 0.3 | 0.3 | 0.3 | 0.3 | 0.3 | 0.3 |
| | Antioxidant 2 | 0.3 | 0.3 | 0.3 | 0.3 | 0.3 | 0.3 | 0.3 | 0.3 | 0.3 |
| Crosslinking condition | Accelerating voltage (kV) | 800 | 800 | 800 | 800 | 800 | 800 | 800 | 800 | 800 |
| | Irradiation dose (Mrad) | 1.2 | 1.0 | 1.4 | 1.2 | 1.2 | 1.0 | 1.0 | 1.2 | 1.2 |
| Physical properties of foam | Crosslinking degree (mass%) | 45 | 40 | 50 | 45 | 45 | 35 | 35 | 40 | 55 |
| | Expansion ratio ($cm^3$/g) | 20 | 25 | 13 | 15 | 25 | 30 | 20 | 20 | 20 |
| | Density (g/$cm^3$) | 0.050 | 0.040 | 0.077 | 0.067 | 0.040 | 0.033 | 0.050 | 0.050 | 0.050 |
| | Thickness (mm) | 4 | 4 | 3 | 3 | 4 | 4 | 4 | 4 | 3 |
| | 25% Compressive strength (kPa) | 92 | 90 | 80 | 105 | 75 | 90 | 150 | 125 | 40 |
| | Ratio (I/M) | 0.56 | 0.54 | 0.51 | 0.61 | 0.52 | 0.78 | 0.80 | 0.70 | 0.43 |
| Evaluation result | Formability | 4 | 3 | 4 | 5 | 3 | 5 | 5 | 5 | 1 |
| | Sensory evaluation on tactile sensation | 4 | 4 | 5 | 3 | 5 | 2 | 1 | 2 | 5 |

The details of the resin components and the additives shown in Table 1 are as follows.

PP: ethylene-propylene random copolymer (random polypropylene), product name: NOVATEC EG7F, manufactured by Japan Polypropylene Corporation, MFR = 1.3 g/10 min, ethylene content: 3 mass%

EPDM: ethylene-propylene-diene copolymer, product name: ESPRENE 301, manufactured by Sumitomo Chemical Co., Ltd., Mooney viscosity (ML$_{1+4}$, 100°C) = 55, ethylene content: 62 mass%, DCPD content: 3 mass%

Foaming agent: azodicarbonamide

Crosslinking aid: trimethyrolpropane trimethacrylate

Antioxidant 1: 2,6-di-tert-butyl-p-cresol

Antioxidant 2: dilauryl thiodipropionate

As clearly seen from the results shown Table 1, in each of Examples, the 25% compressive strength was controlled in a predetermined range and the ratio (I/M) was controlled in a range from 0.45 to 0.65, so that the foam had good formability as well as a soft tactile sensation. In contrast, in each of Comparative Examples 1 to 3, due to the excessively high 25% compressive strength, or due to a ratio (I/M) of more than 0.65, the soft tactile sensation was not created. Further, in Comparative Example 4, due to the excessively low 25% compressive strength, good formability of the foam were not achieved.

**Claims**

1. A crosslinked polyolefin foam made by crosslinking and foaming a polyolefin-based resin composition comprising a polypropylene-based resin and an elastomer,
   the polypropylene-based resin being contained in an amount of 45 to 85 mass% based on the total resin components in the polyolefin-based resin composition,
   the crosslinked polyolefin foam having a 25% compressive strength of 60 to 120 kPa and a ratio of integral value of area under curve value of a stress-strain curve from 0% strain to 25% strain to a product of a strain of 25% and a stress at 25% strain of 0.45 to 0.65.

2. The crosslinked polyolefin foam according to claim 1, having a thickness of 1.5 mm or more.

3. The crosslinked polyolefin foam according to claim 1 or 2, wherein the elastomer is an olefin-based rubber.

4. The crosslinked polyolefin foam according to claim 3, wherein the olefin-based rubber has a Mooney viscosity (ML$_{1+4}$, 100°C) of 15 to 85.

5. The crosslinked polyolefin foam according to claim 3 or 4, wherein the olefin-based rubber is an ethylene-$\alpha$-olefin copolymer-based rubber.

6. The crosslinked polyolefin foam according to any one of claims 1 to 5, wherein the elastomer is contained in an amount of 15 to 55 mass% based on the total resin components in the polyolefin-based resin composition.

7. The crosslinked polyolefin foam according to any one of claims 1 to 6, having a crosslinking degree of 30 to 65%.

8. The crosslinked polyolefin foam according to any one of claims 1 to 7, having an expansion ratio of the foam of 10 to 28 cm$^3$/g.

9. The crosslinked polyolefin foam according to any one of claims 1 to 8, wherein the polypropylene-based resin is contained in an amount of 50 to 80 mass% and the elastomer is contained in an amount of 20 to 50 mass%, based on the total resin components in the polyolefin-based resin composition.

10. A formed product obtained by forming the crosslinked polyolefin foam according to any one of claims 1 to 9.

11. The formed product according to claim 10, for use as a material for vehicle interior.

Figure 1

EXAMPLE 1

Figure 2

COMPARATIVE EXAMPLE 1

## INTERNATIONAL SEARCH REPORT

| International application No. |
| --- |
| PCT/JP2017/035361 |

### A. CLASSIFICATION OF SUBJECT MATTER
Int.Cl. C08J9/06(2006.01)i

According to International Patent Classification (IPC) or to both national classification and IPC

### B. FIELDS SEARCHED

Minimum documentation searched (classification system followed by classification symbols)
Int.Cl. C08J9/06

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2017 |
| Registered utility model specifications of Japan | 1996-2017 |
| Published registered utility model applications of Japan | 1994-2017 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2016-155344 A (TORAY INDUSTRIES) 01 September 2016, claim 1, paragraphs [0001], [0019], [0022]-[0025], [0033], [0034], [0037], [0072]-[0077], table 1 (Family: none) | 1-11 |
| X<br>A | WO 2016/052555 A1 (SEKISUI CHEMICAL CO., LTD.) 07 April 2016, claims 1, 3, 4, 8, paragraphs [0001], [0038], table 1<br>& US 2017/0306123 A1, claims 1, 3, 4, 8, paragraphs [0001],[0110], table 1<br>& EP 3202832 A1 & CA 2962377 A & CN 106715551 A & KR 10-2017-0063620 A & TW 201619269 A | 1-5, 7-8, 10-11<br>6, 9 |

☒ Further documents are listed in the continuation of Box C. ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 19 December 2017 | 09 January 2018 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

**INTERNATIONAL SEARCH REPORT**

International application No.

PCT/JP2017/035361

C (Continuation). DOCUMENTS CONSIDERED TO BE RELEVANT

| Category* | Citation of document, with indication, where appropriate, of the relevant passages | Relevant to claim No. |
|---|---|---|
| A | JP 2012-211215 A (SEKISUI CHEMICAL CO., LTD.) 01 November 2012, claims 1, 4, 5, 6, paragraphs [0013], [0017], [0019], [0038], [0044], [0048], [0060], table 1 (Family: none) | 1-11 |
| A | JP 2003-334880 A (SEKISUI CHEMICAL CO., LTD.) 25 November 2003, claim 1, paragraphs [0011], [0021], [0074], table 1 (Family: none) | 1-11 |
| A | JP 1-14023 B2 (MITSUI PETROCHEM IND. LTD.) 09 March 1989, claims (Family: none) | 1-11 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007029924 A1